# EUROPEAN PATENT SPECIFICATION

(11) **EP 4 516 592 B1**
(45) Date of publication and mention of the grant of the patent: **11.02.2026**
(21) Application number: 24196773.6
(22) Date of filing: 27.08.2024
(51) Int. Cl.: B60R 7/12, B60R 13/02

(54) **TRIM ELEMENT ASSEMBLY COMPRISING CLIPPED CARRIER MEMBER AND SECOND MEMBER ELEMENT, AND ASSOCIATED ASSEMBLING METHODS**
VERKLEIDUNGSELEMENTANORDNUNG MIT EINEM GEKLAMMERTEN TRÄGERELEMENT UND EINEM ZWEITEN ELEMENT SOWIE ZUGEHÖRIGE MONTAGEVERFAHREN
ENSEMBLE D'ÉLÉMENTS DE GARNITURE COMPRENANT UN ÉLÉMENT DE SUPPORT CLIPPÉ ET UN SECOND ÉLÉMENT, ET PROCÉDÉS D'ASSEMBLAGE ASSOCIÉS

(30) Priority: 31.08.2023 FR 2309149
(43) Date of publication of application: 05.03.2025
(73) Proprietor: Faurecia Intérieur Industrie, 92000 Nanterre (FR)
(72) Inventor: CUMPLIDO ALCOCER, Javier, 46025 VALENCIA (ES); SOSPEDRA, Alejandro, 46980 PATERNA (ES); ROMERO, Noelia, 46980 PATERNA (ES)
(74) Representative: Novagraaf Group

(56) References cited:
- FR-A1- 2 852 562
- KR-A- 20130 115 682
- US-A1- 2005 173 483

## Description

The present invention relates to a trim element assembly comprising a carrier member and a second member element, and to associated assembling methods.

The present invention is in particular applicable for providing an umbrella storage within the trim assembly of a vehicle.

KR20130115682 A describes an umbrella storage part for a vehicle below a door entrance. The umbrella storage part is provided with a storage space and a cover adapted to cover the storage space, with a fixing portion to maintain an umbrella in the space.

However, the umbrella storage part requires opening the cover every time someone wants to have access to the space.

The umbrella storage part does not provided a sturdy assembly, such that the trim element may be quite fragile.

Furthermore, the cover does not visually integrate within the vehicle.

One aim of the invention is thus to offer a trim element assembly comprising a carrier member and a second member element, that are fixed to one another, the trim element assembly being sturdy and aesthetic.

To that end, the invention relates to a trim element assembly comprising a carrier member and a second member element, the second member element being adapted to be clipped to the carrier member, the carrier member comprising a first surface, the first surface delimiting an opening and being provided with a first protrusion, the first protrusion comprising at least one hook portion at one end of the first protrusion, the second member element comprising a main portion and a second protrusion, the second protrusion comprising at least one first branch, at least one second branch and at least one bottom, the at least one first branch, the at least one bottom and the at least one second branch forming together a U-shape, the first protrusion cooperating with the second protrusion when the second member element and the carrier member are clipped together, such that the first protrusion extends between the at least one first branch and the at least one second branch along a longitudinal direction, the at least one bottom extends in regard to the first protrusion along a transversal direction, limiting the movement of the second member in the transversal direction, and the hook portion is arranged in regard to the second member element in the transversal direction in the opposite direction, limiting the movement of the second member in this opposite transversal direction.

The cooperation of the first protrusion and the second protrusion allows maintaining the second member element in place in regard to the carrier member along at least two direction, in a robust way. Further, the clipping offers an aesthetic finish

According to specific embodiments of the invention, the method also has one or more of the following features, considered alone or according to any technically possible combination(s):
- the first protrusion is deformable, such that the hook portion is adapted to move in the longitudinal direction ;
- the longitudinal direction corresponds to a through-direction of the opening when the second member element and the carrier member are clipped together ;
- the first protrusion extends from a wall of the carrier member in a first direction away from the opening, the first direction being substantially the transversal direction when the second member element and the carrier member are clipped together ;
- the carrier member comprises a second surface, the second surface forming an angle between 70° and 110° with the first surface, the second surface being provided with at least one maintaining protrusion, the at least one maintaining protrusion being arranged on an opposite side of the opening relative to the first protrusion along the transversal direction, the second member element comprising a maintaining surface adapted to lie against the maintaining protrusion when the second member element and the carrier member are clipped together ;
- the trim element assembly is a door panel, the carrier member being a support panel ;
- the second member element is a cover, the cover being adapted to close the opening when the second member element and the carrier member are clipped together ;
- the second member element delimits with the carrier member a cavity when the second member element and the carrier member are clipped together, the cavity being accessible through the opening and being adapted to receive an umbrella.

The invention further relates to a method for assembling a trim element assembly as described above,
the method comprising the following steps :
- providing the carrier member and the second member element, and
- moving the second member element towards the carrier element, such as to introduce the first protrusion between the at least one first branch and the at least one second branch and such that the at least one bottom extends in regard to the first protrusion, the first protrusion deforming during the movement such that the hook portion is arranged in regard to the second member element in the transversal direction in the opposite direction.

The invention further relates to the afore mentioned method, for assembling a trim element assembly as described above, wherein the moving of the second member element towards the carrier element is, such as to lay the maintaining surface between the maintaining protrusion and a wall delimiting an edge of the opening along the longitudinal direction.

Other features and advantages of the invention will appear upon reading the following description, provided solely as an example and done in reference to the appended drawings, in which:
[Fig. 1] figure 1 is a three-dimensional representation of an example of a trim element assembly according to the invention,
[Fig 2] figure 2 is a three-dimensional representation of a portion of the carrier member of the trim element assembly of figure 1,
[Fig 3] figure 3 is a three-dimensional representation of the second member element of the trim element assembly of figure 1,
[Fig 4] figure 4 is a three-dimensional representation of part of the second member element of figure 3,
[Fig 5] figure 5 is a three-dimensional representation, with a section along plan A-A of figure 1, of the cooperation of the first protrusion and the second protrusion in the trim element assembly of figure 1, and
[Fig 6] figure 6 is a three-dimensional representation of an alternate second member element in a trim element assembly of the invention.

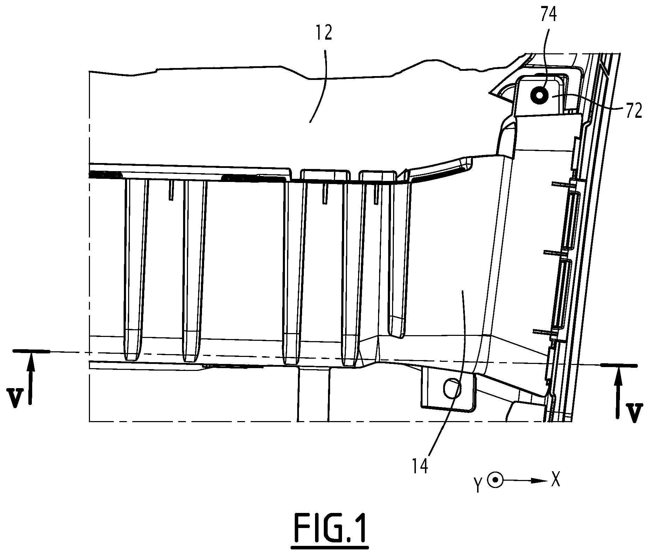

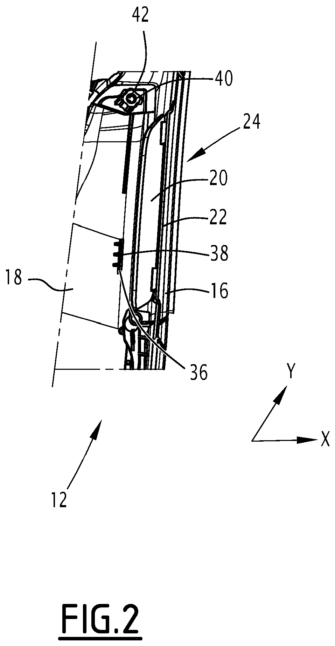

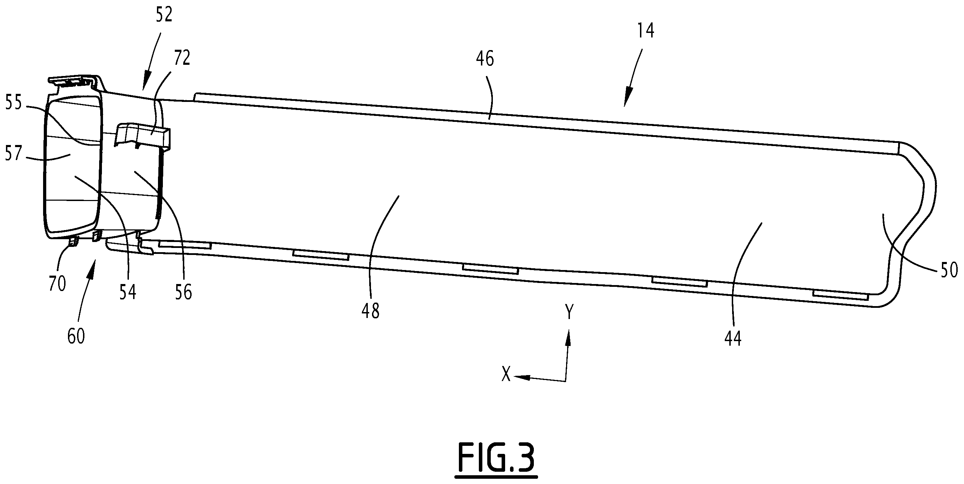

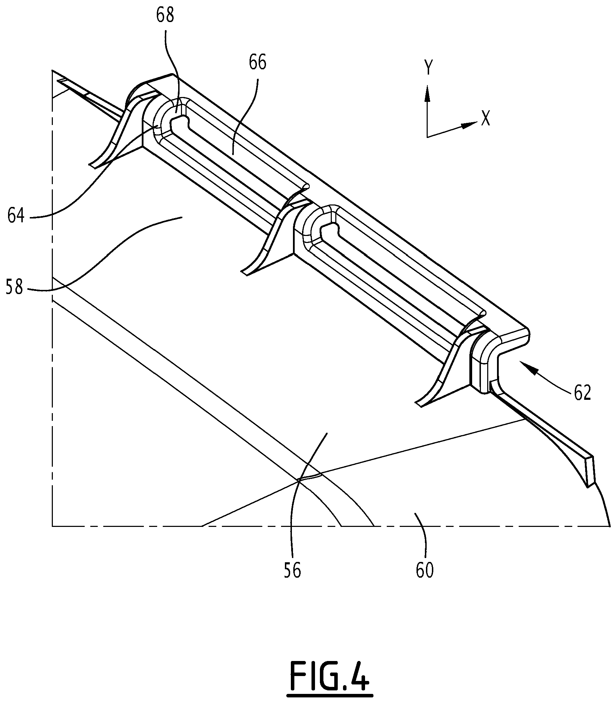

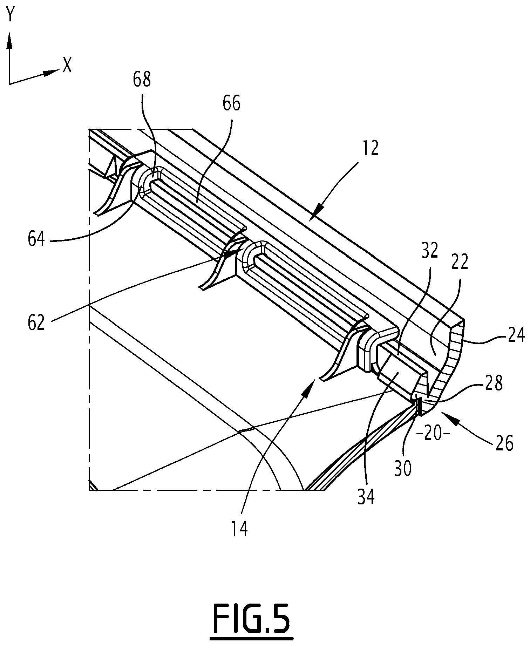

A first example of a trim element assembly 10, here for a vehicle, according to an embodiment of the invention is represented on figures 1 to 5.

The trim element assembly is here a door panel.

The trim element assembly comprises a carrier member 12 and a second member element 14.

Each of a longitudinal direction X and a transversal direction Y are defined for each of the carrier member 12 and the second member element 14, and the respective longitudinal directions X and transversal directions Y are respectively aligned when the carrier member 12 and the second member element 14 are attached.

The second member element 14 is attached to the carrier member 12.

The carrier member 12 is here a support panel of the door panel.

The carrier member 12 comprises a first surface 16.

The carrier member 12 further comprises a second surface 18.

The second surface 18 is here a surface adapted to cover the door opening of the vehicle.

The first surface 16 is here a side of the carrier member 12, more particularly the side of the door opposite the attachment, here the hinge, between the door panel and the rest of the vehicle.

The first surface 16 extends from an edge of the second surface 18.

The second surface 18 forms an angle between 70° and 110° with the first surface 16.

The first surface 16 delimits an opening 20.

The opening 20 runs through the entire thickness of the first surface 16.

The opening 20 has a cross-section with dimensions, such as to allow the passage of an umbrella through the opening, more particularly of an umbrella in translation through the opening along the direction of extension of the umbrella.

The opening 20 defines a through-direction.

The through-direction corresponds to a longitudinal direction, as defined later.

The first surface 16 has an inner face 22 and an outer face 24.

The second member element 14 is adapted to cooperate with the inner face 22 of the first surface 16.

The inner face 22 lies in regard to the second surface 18.

The inner face 22 is provided within the door when the door panel is fully assembled.

The outer face 24 corresponds to the distal edge of the door relative to the vehicle. The outer face 24 is visible by the user, when the door panel is fully assembled.

The carrier member 12 does not define any obstacle adjacent the opening 20, on the inner side or on the outer side.

The first surface 16 is provided with a first protrusion 26.

The first protrusion 26 protrudes from the inner face 22.

The first protrusion 26 protrudes from the edge of the opening 20.

The first protrusion 26 protrudes in a first direction away from the opening 20.

The first protrusion 26 extends along a second direction, perpendicular to the first direction.

Here, the first surface around the opening 20 is curved, such that the inner face 22 is concave.

The first protrusion 26 extends from said inner face 22 surrounding the opening 20.

The first protrusion 26 protrudes substantially parallel to the plane of extension of the opening 20.

The first protrusion 26 comprises a main portion 28 and at least one hook portion 30.

The main portion 28 connects the at least one hook portion 30 to the rest of the carrier member 12.

The main portion 28 here extends from the inner face 22.

The main portion 28 extends from the inner face 22 to a distal end 32.

The main portion 28 is here a rib.

The main portion 28 is planar.

The main portion 28 extends substantially perpendicular to the through-direction of the opening 20.

The first protrusion 26, more precisely the main portion 28, extends along, more precisely protrudes from, at least half of a distal edge of the opening 20. The distal edge of the opening 20 is the portion of the edge of the opening 20 the furthest from the second surface 18.

Here, the main portion 28 extends along all the distal edge of the opening 20.

The height of the main portion 28, measured from the inner face 22 to the distal end 32, is constant along the length of the first protrusion 26.

The at least one hook portion 30 is arranged at one end of the first protrusion 26, here along the second direction.

More precisely, the first protrusion 26 here comprises a hook portion 30 at each end of the first protrusion along the second direction.

The or each hook portion 30 extends from the main portion 28, here from the distal end 32 of the main portion 28.

The or each hook portion 30 comprises a slanted face 34.

The slanted face 34 extends from an inner edge of the distal end 32 at an acute angle with the main portion 28.

The angle is, for example, comprised between 25° and 60°.

The first protrusion 26, more particularly the main portion 28, is deformable, such that the hook portion 30 can move in the longitudinal direction, here perpendicularly to the main portion 28 at rest. In particular, when a force is applied on the slanted surface 34, the hook portion 30 comes closer to the inner face 22 of the first surface 16.

The second surface 18 is provided with at least one maintaining protrusion 36.

The at least one maintaining protrusion 36 is arranged on an opposite side of the opening 20 relative to the first protrusion 26, here in regard to a proximal edge of the opening 30 in opposition with the previously mentioned distal edge.

The proximal edge of the opening is the portion of the edge of the opening the closest to the second surface 18.

The proximal edge and the distal edge are opposite edges of the opening according to a transversal direction Y.

The first direction is substantially parallel to the transversal direction.

The second surface 18 is here provided with a plurality of maintaining protrusions 36.

The plurality of maintaining protrusions are here arranged along a direction perpendicular to the through-direction of the opening 20 and to the transversal direction.

The or each maintaining protrusion form a retaining face 38.

The retaining face 38 is substantially perpendicular to the through-direction of the opening 20.

The retaining face 38 faces the proximal edge of the opening or a portion of the first surface lying between the proximal edge and the second surface along the transversal direction, in the through-direction of the opening.

The distance measured along the through-direction between the retaining face 38 and the proximal edge of the opening or said portion is comprised between 3 mm to 2 cm.

The or each maintaining protrusion 36 protrudes from the second surface 18 in the transversal direction Y.

In the depicted example, the second surface is further provided with a least one structure 40 delimiting a threaded hole 42.

The threaded hole 42 extends along the transversal direction.

The threaded hole 42 is a blind hole.

In a first embodiment, the second member element 14 delimits with the carrier member 12 a cavity 44 when the second member element and the carrier member are attached together, the cavity 44 being accessible through the opening 20 and being adapted to receive an umbrella.

Thus, a user can store an umbrella in the cavity 44. When the vehicle is moving, the door is closed, such that the opening 20 is not accessible and closed by the rest of the vehicle and the umbrella is safely stored inside the cavity. When the door is open (for example when the user gets in or out the vehicle), the opening 20, and thus the cavity 44, are accessible, such that he can place or withdraw an umbrella from the cavity 44 if need be.

The cavity offers a practical and particularly aesthetic and integrated solution to store an umbrella.

More particularly, the second member element 14 here comprises at least one lateral wall 46, 48 and an end wall 50 delimiting with the carrier member 12 the cavity 44.

The second member element 14 comprises a front portion 52 adapted to be rigidly connected to the carrier member 12 around the opening 20.

The front portion 52 delimits a corresponding through-opening 54, the corresponding through-opening 54 extending in continuity with the opening 20.

The corresponding through-opening 54 has dimensions corresponding to the dimension of the opening 20.

The front portion 52 surrounds the corresponding through-opening 54.

More particularly, the front portion 52 comprises a peripheral wall 56 surrounding the corresponding through-opening 54.

The peripheral wall 56 has an end section 55, the end section 55 being an extremity of the second member element 14 along the longitudinal direction X.

The peripheral wall 56, more particularly the end section 55, lies in the continuity of the edge of the opening 20.

The transition between the opening 20 and the corresponding through-opening 54 allows a satisfying aesthetics.

The peripheral wall 56 has an inner face 57 surrounding the corresponding through-opening 54 and an outer face 58.

The lateral wall(s) 46, 48 extend from the peripheral wall 56 away from the corresponding through-opening 54.

The end wall 50 extend from an extremity of the lateral wall(s) 46, 48 opposite the peripheral wall 56.

In the invention, the second member element 14 comprises a main portion 60 and a second protrusion 62.

In the first embodiment, the main portion 60 comprises the peripheral wall 56, and here the lateral wall(s) 46, 48 and the end wall 50.

The second protrusion 62 comprises at least one first branch 64, at least one second branch 66 and at least one bottom 68.

The at least one first branch 64, the at least one bottom 68 and the at least one second branch 66 form together a U-shape.

The union of the sections of the second protrusion 62 in X,Y planes form the U-shape.

The at least one first branch 64 protrudes from the main portion 60, more particularly from the peripheral wall 56, more particularly from the outer face 58 of the peripheral wall 56.

The at least one first branch 64 protrudes here from the outer face 58 of the end section 55 of the peripheral wall 56.

The at least one first branch 64 protrudes from the main portion 60 in a first branch direction.

The first branch direction corresponds to the transversal direction.

Here, the second protrusion 62 comprises a plurality of, here three, first branches 64.

The first branches 64 are here aligned in a direction perpendicular to the transversal direction and the through-direction of the corresponding through-opening 54.

The first branches 64 protrudes from a same side of the peripheral wall, in regard to the corresponding through-opening 54.

The at least one bottom 68 extends from a distal end of the at least one first branch 64, in a longitudinal direction X.

The or each bottom 68 extends from the at least one first branch in the direction going from the corresponding through-opening 54 to the opening 20.

Here, the or each bottom 68 extends away from the second member element 14 along the longitudinal direction X.

The longitudinal direction X corresponds to the through-direction of the opening 20, and here of the corresponding through-opening 54.

More particularly, a bottom 68 extends from the distal end of each first branch 64.

The at least one second branch 66 extends from the at least one bottom 68, more particularly from an end of the bottom opposite the at least one first branch.

The at least one second branch 66 extends parallel to the first branch direction.

Here, the or each second branch 66 connects two adjacent bottoms 68 along the direction perpendicular to the longitudinal direction X and the transversal direction Y.

The or each second branch 66 has a face perpendicular to the through-direction of the corresponding through-opening 54.

The second member element 14 further comprises at least one maintaining surface 70.

The at least one maintaining surface 70 protrudes from the outer face 58 of the peripheral wall 56, more particularly along the transversal direction Y.

The at least one maintaining surface 70 protrudes from the peripheral wall 56 opposite the second protrusion 62 in regard to the corresponding through-opening 54, in particular opposite in the transversal direction Y.

The second member element 14 further comprises a tab 72 delimiting a hole 74.

The hole 74 is, for example, threaded.

Alternatively, the hole 74 is not threaded.

The hole 74 extends along the transversal direction.

The hole 74 is a through-hole.

The hole 74 and the threaded hole 42 line up, such that a screw can be screwed through both threaded holes to secure the carrier member 12 and the second member element 14 together.

The second member element 14 is here clipped to the carrier member 12.

More precisely, the first protrusion 26 cooperates with the second protrusion 62 when the second member element 14 and the carrier member 12 are clipped together.

The first protrusion 26 extends between the at least one first branch 64 and the at least one second branch 66 along the longitudinal direction X.

The at least one bottom 68 extends in regard to the first protrusion 26 along the transversal direction Y. The hook portion 30 is arranged in regard to the second member element 14, more particularly the main body, in the transversal direction Y in the opposite direction. Thus, the hook portion 30 acts as a stop in the transversal direction Y, opposite the at least one bottom 68.

Thus, the cooperation of the first protrusion 26 and the second protrusion 62 maintains together the second member element 14 and the carrier member 12 in the longitudinal direction X and the transversal direction Y in both ways.

Furthermore, here, the maintaining surface 70 is adapted to lie against the maintaining protrusion 36 when the second member element 14 and the carrier member 12 are clipped together.

More particularly, the maintaining surface 70 is arranged, along the longitudinal direction X, between the retaining face 38 and the proximal edge of the opening 20 or a portion of the first surface lying between the proximal edge and the second surface along the transversal direction.

This enables a supplementary hold of the second member element 14 and the carrier member 12 together in the longitudinal direction, opposite the cooperation of the protrusions 26, 62.

The second member element 14 and the carrier member 12 are, for example, also screwed together, more particularly via a screw screwed through both holes 42, 74.

The assembly of the second member element 14 and the carrier member 12 is particularly sturdy.

The door panel, for example, further comprises a cover panel (not represented) assembled on the carrier member 12 after the assembly of the second member element 14 and the carrier member 12, such as to close the door panel. The cover panel and the carrier member form together the outside of the vehicle door. The inner face of the carrier member 12 and the outer face of the second member element 14 are no longer accessible.

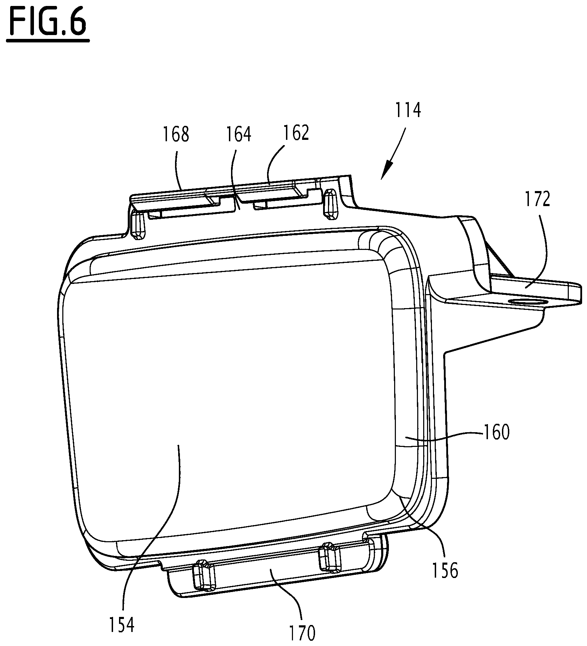

On figure 6, is depicted an example of an alternate second member element 114.

In said embodiment, the second member element 114 is a cover, the cover being adapted to close the opening 20 when the second member element 114 and the carrier member 12 are clipped together.

The second member element 114 comprises a main portion 160 and a second protrusion 162.

The main portion 160 comprises a cover wall 154 adapted to close the opening 20 when the second member element 114 and the carrier member 12 are clipped together.

Thus, when no storage for umbrella is wanted, said second member element 114 is clipped to the carrier member 12, instead of the first embodiment of the second member element 14. The second member element 114 closes the opening 20 to prevent access to the inside of the door panel and to finish the door.

It is thus possible to provide an umbrella storage or no umbrella storage easily, using the same carrier member 12, by simply switching the second member element to be attached to the carrier member, in particular on the assembly line of the vehicle.

The cover wall 154 comprises a border 156.

The second protrusion 162 is similar to the second protrusion 62 described previously.

Only aspects from which they differ will now be described.

Similarly, the at least one first branch 164 protrudes from the main portion 160, here from the border 156.

The or each bottom 168 extends from the at least one first branch in the direction going from the cover wall 154 to the opening 20.

The second member element 114 further comprises at least one maintaining surface 170.

The at least one maintaining surface 170 protrudes from the border 156, more particularly along the transversal direction Y.

The at least one maintaining surface 170 protrudes from the border 156 opposite the second protrusion 162 in regard to the cover wall 154.

The second member element 114 further comprises a tab 172, similar to the tab 72 described previously.

The second member element 114 is attached to the carrier member 12, similarly as the second member element 14 per the first embodiment.

A method for assembling a trim element assembly as described previously will now be described.

A carrier member 12 and a second member element 14, 114, according to any of the embodiments, are provided.

The second member element 14; 114 is moved towards the carrier member 12.

In the represented embodiment, the second member element 14; 114 is moved such as to place the maintaining surface 70; 170 between the maintaining protrusion 36 and a wall delimiting an edge of the opening 20, along the longitudinal direction X, more particularly, between the retaining face 38 and the proximal edge of the opening 20 or the portion of the first surface lying between the proximal edge and the second surface.

The introduction of the maintaining surface 70; 170 is here done before the cooperation of the first protrusion 26 and the second protrusion 62.

The second member element 14; 114 is here moved such as to introduce the first protrusion 26 between the at least one first branch 64 and the at least one second branch 66 and such that the at least one bottom 68 extends in regard to the first protrusion 26, the first protrusion deforming during the movement such that the hook portion 30 is arranged in regard to the second member element 14; 114 in the transversal direction Y in the opposite direction.

The movement is, for example, a translation along the transversal direction Y, in particular in regard to figures 1 to 3, or a rotation around the maintaining surface 170, in particular in regard to figure 6.More particularly, during the movement, at the beginning of the cooperation between the first protrusion 26 and the second protrusion 62, the second member element 14; 114 pushes on the slanted surface 34, such that the first protrusion 26 deforms. The hook portion 30 comes closer to the inner face 22 of the first surface 16, such as to allow the passage of the main portion of the second member element 14; 114.

Thus, the first protrusion 26 is maintained between the at least one first branch 64 and the at least one second branch 66 along the longitudinal direction X and between the at least one bottom 68 and the main portion of the second member element 14; 114.

The carrier member 12 and the second member element 14; 114 are thus clipped in together.

Lastly, the second member element 14, 114 and the carrier member 12 are, for example, also screwed together, more particularly via a screw screwed through both holes 42, 74.

The assembly of the carrier member 12 and the second member element 14, 114 is thus particularly easy through clipping and eventual additional screwing. In particular, there is no need for welding the pieces together.

The resulting trim assembly, in particular door panel, is sturdy and aesthetically pleasing, with a smooth finish.

## Claims

1. Trim element assembly (10) comprising a carrier member (12) and a second member element (14; 114), the second member element (14; 114) being adapted to be clipped to the carrier member (12), the carrier member (12) comprising a first surface (16), the first surface (16) delimiting an opening (20) and being provided with a first protrusion (26), the first protrusion (26) comprising at least one hook portion (30) at one end of the first protrusion (26), the second member element (14; 114) comprising a main portion (60; 160) and a second protrusion (62; 162), the second protrusion (62; 162) comprising at least one first branch (64; 164), at least one second branch (66) and at least one bottom (68; 168), the at least one first branch (64; 164), the at least one bottom (68; 168) and the at least one second branch (66) forming together a U-shape, the first protrusion (26) cooperating with the second protrusion (62; 162) when the second member element (14; 114) and the carrier member (12) are clipped together, such that the first protrusion (26) extends between the at least one first branch (64; 164) and the at least one second branch (66) along a longitudinal direction (X), the at least one bottom (68; 168) extends in regard to the first protrusion (26) along a transversal direction (Y), limiting the movement of the second member in the transversal direction (Y), and the hook portion (30) is arranged in regard to the second member element (14; 114) in the transversal direction (Y) in the opposite direction, limiting the movement of the second member in this opposite transversal direction.

2. Trim element assembly according to claim 1, wherein the first protrusion (26) is deformable, such that the hook portion (30) is adapted to move in the longitudinal direction (X).

3. Trim element assembly according to claim 1 or 2, wherein the longitudinal direction (X) corresponds to a through-direction of the opening (20) when the second member element (14; 114) and the carrier member (12) are clipped together.

4. Trim element assembly according to any one of claims 1 to 3, wherein the first protrusion (26) extends from a wall of the carrier member (12) in a first direction away from the opening (20), the first direction being substantially the transversal direction (Y) when the second member element (14; 114) and the carrier member (12) are clipped together.

5. Trim element assembly according to any one of claims 1 to 4, wherein the carrier member (12) comprises a second surface (18), the second surface (18) forming an angle between 70° and 110° with the first surface (16), the second surface (18) being provided with at least one maintaining protrusion (36), the at least one maintaining protrusion (36) being arranged on an opposite side of the opening (20) relative to the first protrusion (26) along the transversal direction (Y), the second member element (14; 114) comprising a maintaining surface (70; 170) adapted to lie against the maintaining protrusion (36) when the second member element (14; 114) and the carrier member (12) are clipped together.

6. Trim element assembly according to any one of claims 1 to 5, wherein the trim element assembly (10) is a door panel, the carrier member (12) being a support panel.

7. Trim element assembly according to any one of claims 1 to 6, wherein the second member element (114) is a cover, the cover being adapted to close the opening (20) when the second member element (114) and the carrier member (12) are clipped together.

8. Trim element assembly according to any one of claims 1 to 6, wherein the second member element (14) delimits with the carrier member (12) a cavity (44) when the second member element (14) and the carrier member (12) are clipped together, the cavity (44) being accessible through the opening (20) and being adapted to receive an umbrella.

9. Method for assembling a trim element assembly (10) according to any one of claims 1 to 8, the method comprising the following steps :
- providing the carrier member (12) and the second member element (14; 114), and
- moving the second member element (14; 114) towards the carrier element (12), such as to introduce the first protrusion (26) between the at least one first branch (64; 164) and the at least one second branch (66) and such that the at least one bottom (68; 168) extends in regard to the first protrusion (26), the first protrusion (26) deforming during the movement such that the hook portion (30) is arranged in regard to the second member element (14; 114) in the transversal direction (Y) in the opposite direction.

10. Method according to claim 9, for assembling a trim element assembly (10) according to claim 5, wherein the moving of the second member element (14; 114) towards the carrier element (12) is, such as to lay the maintaining surface (70; 170) between the maintaining protrusion (36) and a wall delimiting an edge of the opening (20) along the longitudinal direction (X).

## Patentansprüche

1. Verkleidungselementanordnung (10), umfassend ein Trägerglied (12) und ein zweites Gliedelement (14; 114), wobei das zweite Gliedelement (14; 114) angepasst ist, um an das Trägerglied (12) geklemmt zu werden, das Trägerglied (12) umfassend eine erste Oberfläche (16), wobei die erste Oberfläche (16) eine Öffnung (20) begrenzt und mit einem ersten Vorsprung (26) bereitgestellt wird, der erste Vorsprung (26) umfassend mindestens einen Hakenabschnitt (30) an einem Ende des ersten Vorsprungs (26), das zweite Gliedelement (14; 114) umfassend einen Hauptabschnitt (60; 160) und einen zweiten Vorsprung (62; 162), der zweite Vorsprung (62; 162) umfassend mindestens einen ersten Zweig (64; 164), mindestens einen zweiten Zweig (66) und mindestens einen Boden (68; 168), wobei der mindestens eine erste Zweig (64; 164), der mindestens eine Boden (68; 168) und der mindestens eine zweite Zweig (66) zusammen eine U-Form ausbilden, wobei der erste Vorsprung (26) mit dem zweiten Vorsprung (62; 162) zusammenwirkt, wenn das zweite Gliedelement (14; 114) und das Trägerglied (12) zusammengeklemmt sind, derart, dass sich der erste Vorsprung (26) zwischen dem mindestens einen ersten Zweig (64; 164) und dem mindestens einen zweiten Zweig (66) entlang einer Längsrichtung (X) erstreckt, sich der mindestens eine Boden (68; 168) in Bezug auf den ersten Vorsprung (26) entlang einer Querrichtung (Y) erstreckt, wobei die Bewegung des zweiten Elements in der Querrichtung (Y) begrenzt wird, und der Hakenabschnitt (30) in Bezug auf das zweite Gliedelement (14; 114) in der Querrichtung (Y) in der entgegengesetzten Richtung eingerichtet ist, wobei die Bewegung des zweiten Elements in dieser entgegengesetzten Querrichtung begrenzt wird.

2. Verkleidungselementanordnung nach Anspruch 1, wobei der erste Vorsprung (26) derart verformbar ist, dass der Hakenabschnitt (30) angepasst ist, um sich in der Längsrichtung (X) zu bewegen.

3. Verkleidungselementanordnung nach Anspruch 1 oder 2, wobei die Längsrichtung (X) einer Durchgangsrichtung der Öffnung (20) entspricht, wenn das zweite Gliedelement (14; 114) und das Trägerglied (12) zusammengeklemmt sind.

4. Verkleidungselementanordnung nach einem der Ansprüche 1 bis 3, wobei sich der erste Vorsprung (26) von einer Wand des Trägerglieds (12) in einer ersten Richtung weg von der Öffnung (20) erstreckt, wobei die erste Richtung im Wesentlichen die Querrichtung (Y) ist, wenn das zweite Gliedelement (14; 114) und das Trägerglied (12) zusammengeklemmt sind.

5. Verkleidungselementanordnung nach einem der Ansprüche 1 bis 4, wobei das Trägerglied (12) eine zweite Oberfläche (18) umfasst, wobei die zweite Oberfläche (18) einen Winkel zwischen 70° und 110° mit der ersten Oberfläche (16) ausbildet, wobei die zweite Oberfläche (18) mit mindestens einem Haltevorsprung (36) bereitgestellt wird, wobei der mindestens eine Haltevorsprung (36) auf einer gegenüberliegenden Seite der Öffnung (20) relativ zu dem ersten Vorsprung (26) entlang der Querrichtung (Y) eingerichtet ist, das zweite Gliedelement (14; 114) umfassend eine Halteoberfläche (70; 170), die angepasst ist, um an dem Haltevorsprung (36) anzuliegen, wenn das zweite Gliedelement (14; 114) und das Trägerglied (12) zusammengeklemmt sind.

6. Verkleidungselementanordnung nach einem der Ansprüche 1 bis 5, wobei die Verkleidungselementanordnung (10) eine Türplatte ist, wobei das Trägerglied (12) eine Stützplatte ist.

7. Verkleidungselementanordnung nach einem der Ansprüche 1 bis 6, wobei das zweite Gliedelement (114) eine Abdeckung ist, wobei die Abdeckung angepasst ist, um die Öffnung (20) zu schließen, wenn das zweite Gliedelement (114) und das Trägerglied (12) zusammengeklemmt sind.

8. Verkleidungselementanordnung nach einem der Ansprüche 1 bis 6, wobei das zweite Gliedelement (14) mit dem Trägerglied (12) einen Hohlraum (44) begrenzt, wenn das zweite Gliedelement (14) und das Trägerglied (12) zusammengeklemmt sind, wobei der Hohlraum (44) durch die Öffnung (20) zugänglich ist und angepasst ist, um einen Schirm aufzunehmen.

9. Verfahren zum Anordnen einer Verkleidungselementanordnung (10) nach einem der Ansprüche 1 bis 8, das Verfahren umfassend die folgenden Schritte:
- Bereitstellen des Trägerglieds (12) und des zweiten Gliedelements (14; 114), und
- Bewegen des zweiten Gliedelements (14; 114) in Richtung des Trägerglieds (12), um den ersten Vorsprung (26) zwischen den mindestens einen ersten Zweig (64; 164) und den mindestens einen zweiten Zweig (66) einzuführen, und derart, dass sich der mindestens eine Boden (68; 168) in Bezug auf den ersten Vorsprung (26) erstreckt, wobei sich der erste Vorsprung (26) während der Bewegung derart verformt, dass der Hakenabschnitt (30) in Bezug auf das zweite Gliedelement (14; 114) in der Querrichtung (Y) in der entgegengesetzten Richtung eingerichtet ist.

10. Verfahren nach Anspruch 9, zum Anordnen einer Verkleidungselementanordnung (10) nach Anspruch 5, wobei das Bewegen des zweiten Gliedelements (14; 114) in Richtung des Trägerglieds (12) derart erfolgt, dass die Halteoberfläche (70; 170) zwischen den Haltevorsprung (36) und eine Wand gelegt wird, die eine Kante der Öffnung (20) entlang der Längsrichtung (X) begrenzt.

## Revendications

1. Assemblage d'éléments d'habillage (10) comprenant un organe porteur (12) et un second élément d'organe (14 ; 114), le second élément d'organe (14 ; 114) étant conçu pour être encliqueté à l'organe porteur (12), l'organe porteur (12) comprenant une première surface (16), la première surface (16) délimitant une ouverture (20) et étant pourvue d'une première protubérance (26), la première protubérance (26) comprenant au moins une portion crochet (30) au niveau d'une extrémité de la première protubérance (26), le second élément d'organe (14 ; 114) comprenant une portion principale (60 ; 160) et une seconde protubérance (62 ; 162), la seconde protubérance (62 ; 162) comprenant au moins une première branche (64 ; 164), au moins une seconde branche (66) et au moins un fond (68 ; 168), l'au moins une première branche (64 ; 164), l'au moins un fond (68 ; 168) et l'au moins une seconde branche (66) créant ensemble une forme de U, la première protubérance (26) coopérant avec la seconde protubérance (62 ; 162) lorsque le second élément d'organe (14 ; 114) et l'organe porteur (12) sont encliquetés ensemble, de telle sorte que la première protubérance (26) s'étend entre l'au moins une première branche (64 ; 164) et l'au moins une seconde branche (66) le long d'une direction longitudinale (X), l'au moins un fond (68 ; 168) s'étend en regard de la première protubérance (26) le long d'une direction transversale (Y), limitant le mouvement du second organe dans la direction transversale (Y), et la portion crochet (30) est agencée par rapport au second élément d'organe (14 ; 114) dans la direction transversale (Y) dans la direction opposée, limitant le mouvement du second organe dans cette direction transversale opposée.

2. Assemblage d'éléments d'habillage selon la revendication 1, dans lequel la première protubérance (26) est déformable, de telle sorte que la portion crochet (30) est conçue pour se déplacer dans la direction longitudinale (X).

3. Assemblage d'éléments d'habillage selon la revendication 1 ou 2, dans lequel la direction longitudinale (X) correspond à une direction traversante de l'ouverture (20) lorsque le second élément d'organe (14 ; 114) et l'organe porteur (12) sont encliquetés ensemble.

4. Assemblage d'éléments d'habillage selon l'une quelconque des revendications 1 à 3, dans lequel la première protubérance (26) s'étend à partir d'une paroi de l'organe porteur (12) dans une première direction à l'écart de l'ouverture (20), la première direction étant sensiblement la direction transversale (Y) lorsque le second élément d'organe (14 ; 114) et l'organe porteur (12) sont encliquetés ensemble.

5. Assemblage d'éléments d'habillage selon l'une quelconque des revendications 1 à 4, dans lequel l'organe porteur (12) comprend une seconde surface (18), la seconde surface (18) formant un angle entre 70° et 110° avec la première surface (16), la seconde surface (18) étant pourvue d'au moins une protubérance de maintien (36), l'au moins une protubérance de maintien (36) étant agencée sur un côté opposé de l'ouverture (20) en regard de la première protubérance (26) le long de la direction transversale (Y), le second élément d'organe (14 ; 114) comprenant une surface de maintien (70 ; 170) conçue pour s'appuyer sur la protubérance de maintien (36) lorsque le second élément d'organe (14 ; 114) et l'organe porteur (12) sont encliquetés ensemble.

6. Assemblage d'éléments d'habillage selon l'une quelconque des revendications 1 à 5, dans lequel l'assemblage d'éléments d'habillage (10) est un panneau de portière, l'organe porteur (12) étant un panneau de support.

7. Assemblage d'éléments d'habillage selon l'une quelconque des revendications 1 à 6, dans lequel le second élément d'organe (114) est un couvercle, le couvercle étant conçu pour fermer l'ouverture (20) lorsque le second élément d'organe (114) et l'organe porteur (12) sont encliquetés ensemble.

8. Assemblage d'éléments d'habillage selon l'une quelconque des revendications 1 à 6, dans lequel le second élément d'organe (14) délimite avec l'organe porteur (12) une cavité (44) lorsque le second élément d'organe (14) et l'organe porteur (12) sont encliquetés ensemble, la cavité (44) étant accessible à travers l'ouverture (20) et étant conçue pour recevoir un parapluie.

9. Procédé d'assemblage d'un assemblage d'éléments d'habillage (10) selon l'une quelconque des revendications 1 à 8, le procédé comprenant les étapes suivantes :
- la fourniture de l'organe porteur (12) et du second élément d'organe (14 ; 114), et
- le déplacement du second élément d'organe (14 ; 114) en direction de l'élément de support (12), de façon à introduire la première protubérance (26) entre l'au moins une première branche (64 ; 164) et l'au moins une seconde branche (66) et de telle sorte que l'au moins un fond (68 ; 168) s'étend en regard de la première protubérance (26), la première protubérance (26) se déformant pendant le mouvement de telle sorte que la portion crochet (30) est agencée par rapport au second élément d'organe (14 ; 114) dans la direction transversale (Y) dans la direction opposée.

10. Procédé selon la revendication 9, permettant d'assembler un assemblage d'éléments d'habillage (10) selon la revendication 5, dans lequel le déplacement du second élément d'organe (14 ; 114) en direction de l'élément porteur (12) est tel qu'il dépose la surface de maintien (70 ; 170) entre la protubérance de maintien (36) et une paroi délimitant un bord de l'ouverture (20) le long de la direction longitudinale (X).
